(19) Europäisches Patentamt / European Patent Office / Office européen des brevets

(11) **EP 3 523 918 B1**

(12) **EUROPEAN PATENT SPECIFICATION**

(45) Date of publication and mention
of the grant of the patent:
**27.05.2020 Bulletin 2020/22**

(21) Application number: **16781736.0**

(22) Date of filing: **11.10.2016**

(51) Int Cl.:
*H04L 7/033* *(2006.01)*    *H04B 10/54* *(2013.01)*
*H04L 25/06* *(2006.01)*

(86) International application number:
**PCT/EP2016/074254**

(87) International publication number:
**WO 2018/068824 (19.04.2018 Gazette 2018/16)**

(54) **EYE DESKEW METHOD**

VERFAHREN ZUR AUGENENTZERRUNG

PROCÉDÉ DE RÉALIGNEMENT DE DIAGRAMME EN OEUIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2019 Bulletin 2019/33**

(73) Proprietor: **Huawei Technologies Co., Ltd.
Longgang District
Shenzhen, Guangdong 518129 (CN)**

(72) Inventor: **STOJANOVIC, Nebojsa
80992 Munich (DE)**

(74) Representative: **Gill Jennings & Every LLP
The Broadgate Tower
20 Primrose Street
London EC2A 2ES (GB)**

(56) References cited:
**EP-A2- 1 267 172      US-A1- 2002 196 510
US-A1- 2015 071 653**

**Description**

TECHNICAL FIELD

The present invention relates to an apparatus and method for deskewing the eye diagram of a multilevel signal in a transmission system such as - but not limited to - a fiber optical transmission system with direct detection optical receivers.

BACKGROUND

In optical communications, intensity modulation (IM) is a form of modulation in which the optical power output of a source is varied in accordance with some characteristic of the modulation signal. The envelope of the modulated optical signal corresponds to the modulating signal in the sense that the instantaneous power of the envelope is an envelope of the characteristic of interest in the modulation signal. Recovery of the modulating signal is usually achieved by direct detection (DD) through a photo-detector.

Next-generation ultra-high-speed short-reach optical fiber links will utilize small, cheap and low power consumption transceivers. All those requirements are mainly imposed due to the limited space of data center equipment. The transceivers should support intra- and inter-data center connections from a few hundred meters up to several tens of kilometers, respectively.

Data centers are facilities that store and distribute the data on the Internet. With an estimated number of more than 100 billion of web pages on over 100 million websites, it is clear that those data centers shall be adapted to contain a huge amount of data. With almost two billion users accessing all these websites, including a growing amount of high bandwidth video, it is hard to comprehend how much data is being uploaded and downloaded every second on the Internet. A data center, as defined in the ANSI/TIA/EIA-942 standard "Telecommunications Infrastructure Standard for Data Centers", is a building or portion of a building whose primary function is to house a computer room and its support areas. The main functions of a data center are to centralize and consolidate information technology (IT) resources, house network operations, facilitate e-business and to provide uninterrupted service to mission-critical data processing operations. Data centers can be part of an enterprise network, a commercial venture that offers to host services for others or a co-location facility where users can place their own equipment and connect to the service providers over the building's connections. Data centers may serve local area networks (LANs) or wide area networks (WAN) and may be comprised of switches connecting user devices to server devices and other switches connecting server devices to storage devices.

A preferred solution may be to transmit 100 Gbit/s per wavelength, which is very challenging when a very cheap solution is required. A coherent approach is out of scope as it requires high power and expensive devices. Therefore, IM and DD schemes are preferred. The mature on-off keying (OOK) modulation format, widely used in non-coherent systems has been also investigated for so-called 100-G applications at 100 Gbit/s per wavelength speed. However, such a solution would require expensive high-bandwidth optics and electronics. To overcome that drawback, advanced modulation formats supported by digital signal processing (DSP) have been investigated as an alternative technology to support 100-G applications, the most promising candidates being duo-binary 4-level pulse amplitude modulation (DB-PAM-4), discrete multi-tone modulation (DMT), and carrier-less amplitude and phase modulation (CAP). All the aforementioned approaches require either expensive components or enhanced DSP or both of them and cannot be considered as serious candidates for data center connections.

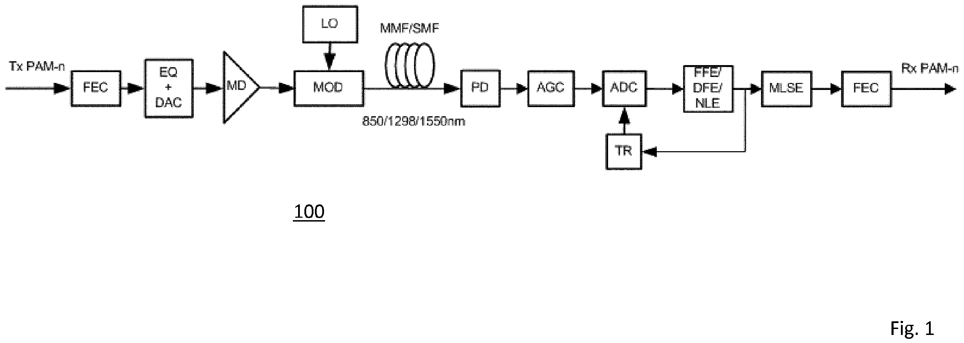

As a DSP has to be avoided, a schematic block diagram of a simple and cheap conventional IM/DD-based PAM-N (or N-PAM) transmission system 100 is presented in Fig. 1.

Data encoded by a forward error correction (FEC) block can be equalized digitally and converted to an analog signal by using a digital-to-analog converter (DAC). In order to decrease any complexity, data can be equalized in the analog domain by a continuous-time linear equalizer (CTLE). Afterwards, said signal is amplified using a modulator driver (MD). Distributed feedback laser (DFB) together with electro-absorption modulator (EAM) integrated in transmit optical subassemblies (TOSA) are often used in cheap systems. Other cheap solutions can include a direct-modulated laser (DML) or a vertical-cavity surface-emitting laser (VCSEL). The optical signal after modulator can be transmitted over different fiber types according to some requirements in terms of distance, bit rate, and so on. At the receiver side, a photo-diode (e.g., a positive intrinsic negative (PIN) diode or an avalanche photo-diode (APD)) detects the optical signal, the photo-diode output being proportional to the power of the optical signal. The photo-diode output is then amplified using a transimpedance amplifier (TIA). The photo-diode and the TIA can be integrated in receive optical subassemblies (ROSA), which may include an automatic gain control circuit (AGC) used to adjust an electrical signal with respect to an analog-to-digital (ADC) input when an electronic equalization is used.

At the receiver side, an equalizer recovers the signal, which suffers from noise and intersymbol interference (ISI). However, before the equalizer is activated, the local oscillator must be locked to the input signal, i.e., locked to the transmitter oscillator responsible for data clocking, so that those two oscillators must be synchronized. Small deviations are allowed since it is impossible to perfectly track the transmitter clock source. Clock extraction is supported by a timing recovery (TR) block that controls ADC sampling frequency and phase. The performance of this TR block is strongly influenced by the noise that is partly filtered out by specific filters. However, some imperfections, such as bandwidth limitation and chromatic dispersion (CD), may result in a very weak timing function. Therefore, the signal used for timing recovery has to be partially compensated to enable correct ADC clocking. Feed-forward equalizers (FFE) and decision feedback equalizers (DFE) can be found in many practical systems. On the other hand, nonlinear equalizers (NLE) are less deployed although they can bring a significant gain in some special applications. Once recovered by the equalizer, the equalized signal can be used for clock extraction to decrease the clock jitter.

This signal can be further processed by a maximum-likelihood sequence estimator (MLSE) to improve the bit error rate (BER) before knowing the final decisions provided by the forward error correction (FEC) block, i.e., the FEC decoder. However, in systems using a VCSEL, a DML or an externally modulated laser (EML), the modulated optical multilevel signal can suffer from the skewing effect, which results in BER degradation. The problem is more visible in signals having more than two levels. Additionally, in systems strongly limited by bandwidths of optical and electrical components, the received signal may have more levels than the transmitted signal. For example, in some faster systems than Nyquist systems, the PAM-4 signal is transformed into a signal with seven levels, i.e., into a poly PAM-4 signal.

Not all signal levels will arrive at the same time, i.e., the eye diagram consisting of several sub-eyes (e.g., three eyes in PAM-4) will not be aligned in time. Thus, the multilevel signal will be impaired by time skew from eye to eye. For information, an eye diagram is a common indicator of the quality of signals in high-speed digital transmissions. An oscilloscope generates an eye diagram by overlaying sweeps of different segments of a long data stream driven by a master clock. Overlaying many bits produces an eye diagram, so called because the resulting image looks like the opening of an eye. In an ideal world, eye diagrams would look like rectangular boxes. In reality, communications are imperfect, so that the transitions do not line perfectly on top of each other, which results in an eye-shaped pattern. Differences in timing and amplitude from bit to bit cause the eye opening to shrink.

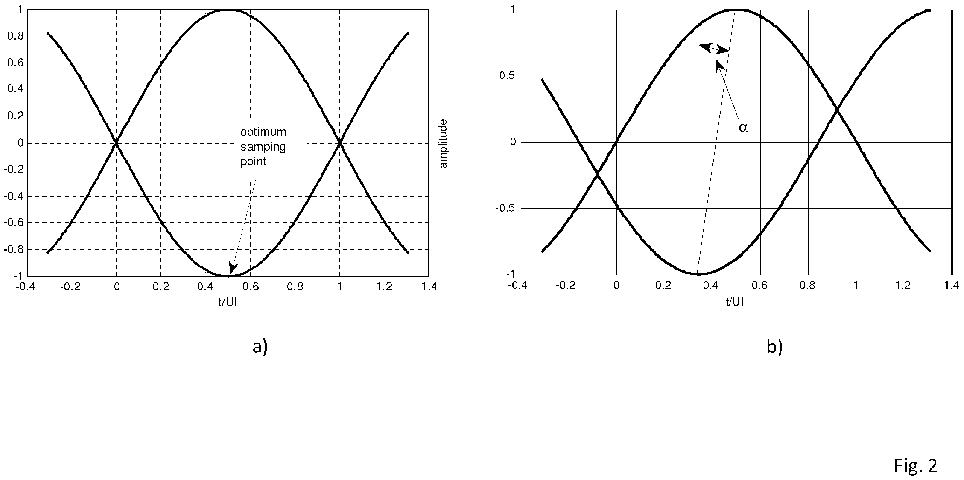

Through the simplest example for a binary signaling, Fig. 2 shows a PAM-2 signal amplitude versus a normalized time (t/UI) depicting an eye diagram without eye skew (Fig. 2(a)) and with eye skew (Fig. 2(b)). As can be seen in Fig. 2(a), when the system works correctly, i.e., without any eye skew, the optimum sampling point corresponding to the lowest BER is located in the middle of the eye, i.e., at 0.5UI where the unit interval (UI) represents a symbol period. On the other hand, as can be seen in Fig. 2(b), an eye skew with an angle denoted $\alpha$ is generated when the higher PAM-2 signal level arrives later (please note that it can arrive earlier in some cases) than the lower one, thereby leading to an asymmetrical eye and a shift of the optimum sampling point from 0.5 UI. Such asymmetry results in higher BER and more sensitivity to clock jitter, so that the optimum sampling phase and the corresponding level threshold of the signal level should be carefully selected to maximize the system performance. The skew problem in the case of a binary signaling may be partially solved by sampling phase and level threshold optimization. However, in the case of more than 2 signal levels, this problem becomes extremely complicated because there is no rule about how this skew works. Indeed, each eye may have a different shape and skew value.

US2015071653 describes an optical communication system, a transmitter, a receiver, and methods of operating the same are provided. In particular, a transmitter is disclosed as being configured to encode optical signals in accordance with a multi-level coding scheme. The receiver is configured to provide skew correction to the optical signals received from the transmitter by dividing a received signal into separate level-specific components and sampling each of the components with distinct sampling blocks.

SUMMARY

It is therefore an object of the present invention to provide an apparatus and method for deskewing an eye diagram of a multilevel signal, by means of which BER performance can be significantly improved.

The object is achieved by the features of the independent claims. Further embodiments of the invention are apparent from the dependent claims, the description and the figures.

According to a first aspect, the invention relates to an apparatus according to claim 1.

Thereby, the skew value of each eye can be estimated and the skewed signal can be deskewed after deskewing subregions, i.e., quantization regions, of the received signal, which allows the BER performance to be significantly improved. The proposed apparatus for deskewing a multilevel signal can be advantageously used in multilevel transmission systems since the skew of multilevel signals, such as PAM-n signals, bandlimited PAM-n signals (e.g., poly PAM-n signals) and coherent real or complex signals, can thus be estimated. In the case of complex signals, the in-phase and quadrature components shall be processed independently.

According to a first implementation of the apparatus according to the first aspect, the estimation of the skew value is performed by using one or two samples per symbol.

Thereby, the estimation of the skew value can be carried out at high speed since very few samples per symbol, i.e., one or two, are used. It should be noted that using either one or two samples per symbol does not noticeably impact the final system performance.

The above object is also solved in accordance with a second aspect according to claim 5.

The above object is also solved in accordance with a third aspect.

According to the third aspect, the invention relates to a computer program comprising a program code for performing the method according to the second aspect or any one of the implementations of the second aspect when executed on a computer.

Thereby, the method can be performed in an automatic and repeatable manner.

The computer program can be performed by the above apparatus. The apparatus can be programmably arranged to perform the computer program.

More specifically, it should be noted that the above apparatus may be implemented based on a discrete hardware circuitry with discrete hardware components, integrated chips or arrangements of chip modules, or based on a signal processing device or chip controlled by a software routine or program stored in a memory, written on a computer-readable medium, or downloaded from a network, such as the internet. The above apparatus may be implemented without signal transmission or receiving capability for simply controlling the transmission or reception function of a corresponding transmitter device or receiver device.

It shall further be understood that a preferred embodiment of the invention can also be any combination of the dependent claims or above embodiments with the respective independent claim.

These and other aspects of the invention will be apparent and elucidated with reference to the embodiments described hereinafter.

BRIEF DESCRIPTION OF THE DRAWINGS

In the following detailed portion of the present disclosure, the invention will be explained in more detail with reference to the exemplary embodiments shown in the drawings, in which:

Fig. 1     shows a schematic block diagram of a simple and cheap conventional IM/DD-based PAM-N transmission system 100, in which the present invention can be implemented;

Fig. 2     shows a PAM-2 signal amplitude versus a normalized time (t/UI) depicting an eye diagram (a): without eye skew and (b): with eye skew;

Fig. 3     shows a schematic block diagram of a simulated 112Gbit/s PAM-4 transmission system 200 with a limited bandwidth (BW) according to an embodiment of the present invention;

Fig. 4     shows (a): the normalized spectra of the DAC output signal and all signals under investigation in back-to-back (B2B) transmission and with a received input power (Pin) of -4dBm, (b): a signal amplitude versus a normalized time (t/UI) depicting an eye diagram of a DB-PAM-4 signal and (c): a signal amplitude versus a normalized time (t/UI) depicting an eye diagram of a PAM-4 signal, according to an embodiment of the present invention;

Fig. 5     shows a signal amplitude versus a normalized time (t/UI) depicting (a): a non-averaged eye diagram of a DB-PAM-4 signal and (b): an averaged eye diagram of a DB-PAM-4 signal, according to an embodiment of the present invention;

Fig. 6     shows a standard deviation per level versus a normalized time (t/UI) using (a): one sample per symbol (1sps) and (b): two samples per symbol (2sps), according to an embodiment of the present invention;

Fig. 7     shows a signal amplitude versus a normalized time (t/UI) depicting (a): an eye diagram of a DB-PAM-4 signal before deskewing and (b): an eye diagram of a DB-PAM-4 signal after deskewing through a first deskewing method (DA1), according to an embodiment of the present invention;

Fig. 8     shows a BER value versus a Pin value before and after deskewing through a second deskewing method (DA2) in the case of a fiber link having a length equal to (a): 0 km (B2B) and (b): 20 km, according to an embodiment of the present invention;

Fig. 9     shows a schematic block diagram of the proposed apparatus 300 for deskewing a multilevel signal according to an embodiment of the present invention.

Identical reference signs are used for identical or at least functionally equivalent features.

## DETAILED DESCRIPTION OF EMBODIMENTS OF THE INVENTION

Transmission system nonlinearities can generate eye deskewing of a signal. According to the following embodiments, a new eye deskewing approach is provided for deskewing an eye diagram of a M-level signal (such as PAM-N signal, bandlimited PAM-N signal, poly PAM-N signal, and coherent real or complex signal, where N is a positive integer and M is a natural integer verifying $N \leq M$) in multilevel signal transmission systems. The skewed signal is deskewed by deskewing subregions of the received signal. The eye deskewing is achieved by either one or two samples per symbol. Using one or two samples does not noticeably impact the final system performance. Two eye deskewing processes are described and they can be combined to derive a new process that can be more convenient for a specific transmission scenario such as a scenario using directly modulated lasers. The eye deskewing process can be performed at the transmitter side, i.e., in the DAC, after finding the eye deskew values. With respect to a localization at the receiver side, the signal is less noisy, the interpolation will introduce less noise and some part of the FFE equalizer will be able to be made in the DAC. When the eye skew depends on the signal pattern and signal level, the eye deskew values can be refined by introducing the signal pattern dependence.

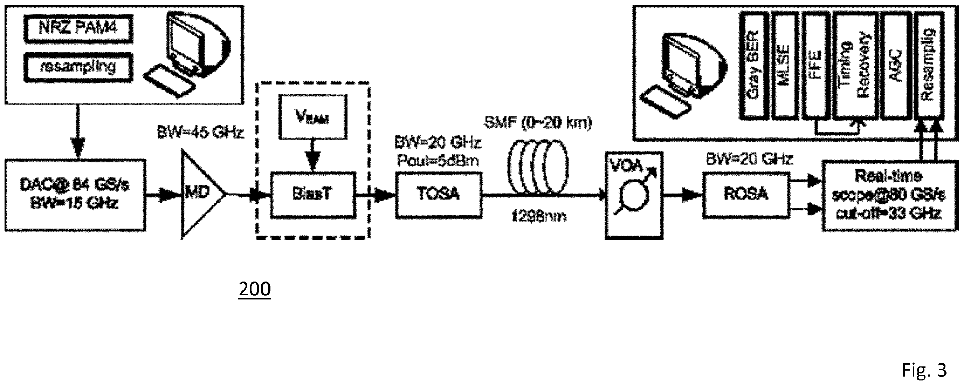

Referring to the conventional IM/DD-based PAM-N transmission system 100 of Fig. 1, various embodiments of the present invention will be now described based on a simulated 112Gbit/s PAM-4 transmission system 200 with a limited bandwidth (BW), as depicted in Fig. 3.

In Fig. 3, a pseudo-random non-return-to-zero (NRZ) PAM-4 data sequence of 43008 symbols is generated in MATLAB and loaded towards a digital-to-analog converter (DAC) with an 8-bit resolution. It is noted that no DAC-based pre-compensation (i.e., no DSP at the transmitter side) has been made, thereby reducing the complexity of the global system. The corresponding electrical PAM-4 signal is generated by using only a 2-bit DAC operating at 84 GS/s and a biased-output modulator driver (MD). The optical link consists of the TOSA, single-mode optical fiber (SMF), and ROSA. The ROSA input optical power is controlled by a variable optical attenuator (VOA). The data are captured by a real-time oscilloscope operating at 80 GS/s and processed offline using a DSP. In the DSP part, the signal is first resampled and adjusted through the AGC, and then a timing recovery (TR) is performed. The TR is based on a Mueller and Muller phase detector (M&M PD) while using the FFE output to compensate for the jitter generated by the DAC. The multi-modulus FFE and the M&M PD use one sample per symbol and the whole DSP performs equalization in a blind mode.

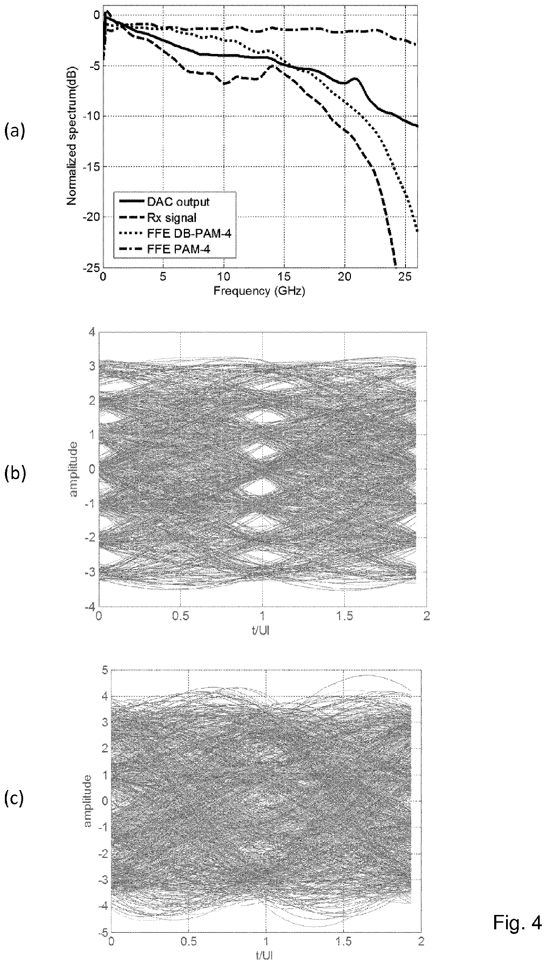

Thus, the 112Gbit/s NRZ PAM-4 signal has been generated using two samples per symbol, down-sampled to 84GS/s, and loaded to the DAC, while the received input power (Pin) was equal to -4dBm. The spectrum of the DAC output signal and the spectra of all signals under investigation are presented in Fig. 4(a). The DAC transfer function (TF) (denoted DAC output) falls smoothly after 20 GHz while the total TF (denoted Rx signal spectrum) seriously degrades at frequencies above 15 GHz. The FFE equalizer is forced to work in a training mode to regenerate DB-PAM-4 (duo-binary or poly) and PAM-4 signals. Indeed, the FFE equalizer is able to reshape the total TF into the DB-PAM-4 TF (denoted FFE DB-PAM-4), and the resulting eye diagram presented in Fig. 4(b) clearly indicates seven DB-PAM-4 levels. Conversely, as it is observed in Fig. 4(c), the PAM-4 equalization totally fails. Indeed, as depicted in Fig. 4(a), the PAM-4 equalized spectrum (denoted FFE PAM-4) is quite far from the Rx signal spectrum due to strong noise amplification, thereby explaining why no eye can be observed in Fig. 4(c). On the other hand, the blind PAM-4 equalization fails in all cases under investigation as the FFE taps cannot converge, whereas the blind DB-PAM-4 FFE acquisition always succeeds. Thus, the DB-PAM-4 FFE equalization provides a better BER than the PAM-4 equalization. By carefully looking at the DB-PAM-4 eye diagram of Fig. 4(b), one can note that the depicted eyes have different shapes and that some of them are not symmetric around the sampling phase. Such asymmetry will cause BER degradation, which can be more critical at lower BERs.

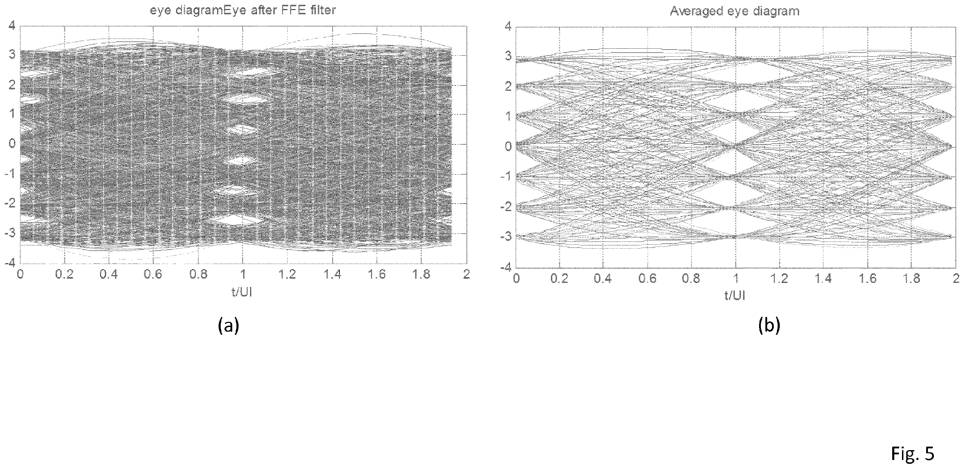

In the following, a signal at the input power of Pin=-4dBm has been used and equalized through the FFE equalizer in order to get the DB-PAM-4 eye, as depicted in Fig. 5(a). This eye discloses seven levels equal to -3, -2, -1, +1, +2, and +3, but the eye diagram is so noisy that it is very difficult to estimate the skew of each level without an additional averaging procedure. Thus, as shown in Fig. 5(b), the signal has been averaged over three UI for specific data patterns and the eye diagram has become less noisy while indicating skew-critical levels. It should be noted that not all transitions between the seven levels are allowed. As shown in Fig. 5(b), the levels -2, -1, and +2 are a bit skewed while the level +3 is the most skewed. If the signal after the FFE equalizer is between the levels +2 and +3, the optimum sampling point is obviously not 1 and is rather placed a bit on the right-hand side, whereas the optimum threshold position is unclear.

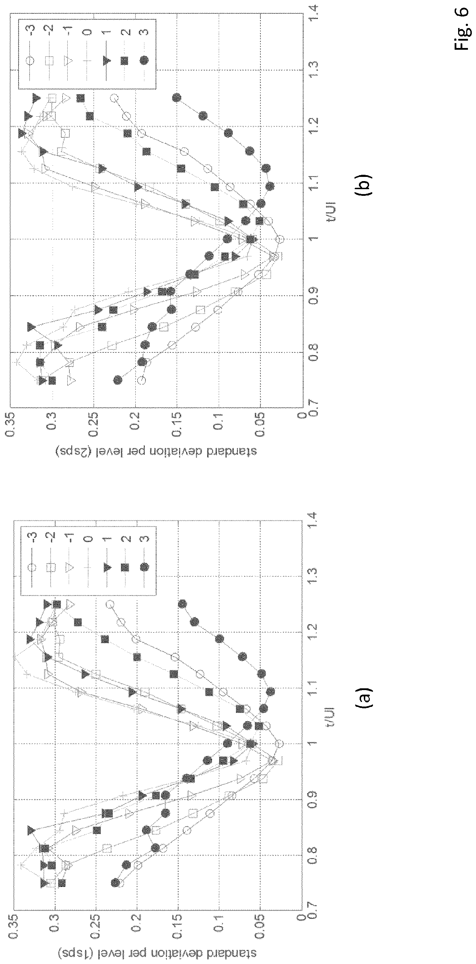

For each of seven levels -3, -2, -1, +1, +2, and +3, the standard deviation ($\sigma$), which can be considered as an alternative to the angle measurement $\alpha$, has been estimated at different sampling locations. However, as the FFE can only deliver one or two samples per symbol, the interpolation accuracy related to the standard deviation estimation has been estimated using one and two samples per symbol (i.e., 1sps and 2sps), as the interpolation operation has to be made after the FFE equalizer. The corresponding results are respectively presented in Fig. 6(a) and Fig. 6(b), in which the skew value of the considered level can be derived from the minimum location corresponding to the minimum standard deviation ($\sigma_{min}$) per level. For example, the level +3 has $\sigma_{min}$ at 1.1U, so that it is skewed by a time shift $\Delta$UI (i.e., a skew value) of approximately 0.1UI with respect to the optimum sampling point of 1UI, which is very close to what can be visually estimated by looking at Fig. 5. Thus, the present invention allows skew values of all levels to be very accurately estimated, the next step being to know how to use those skew values and what should be deskewed.

In more details, the skew estimation of the present invention can be applied to a multilevel signal, for example, a PAM-N signal (also denoted N-PAM signal) with M levels, where M is a natural integer that verifies $N \leq M$, and be carried out according to either a first method (denoted SEA1) or a second method (denoted SEA2).

In the first method (SEA1), M equidistant signal levels ($L_i$), where i=0, 1, ..., M-1, and M+1 quantizer limits ($Q_i$) are defined so that the quantizer output is $L_i$ if $Q_i < x \leq Q_{i+1}$, where x is a sample of the interpolated sample at the output of the FFE equalizer, i.e., a sample of the multilevel signal. A skew scanning resolution R (e.g., R=UI/32) and a symmetrical skew scanning range (SSR) (e.g., SSR=UI/2, which means SSR ranging from -UI/4 to UI/4) are also defined. The standard deviation ($\sigma_{i,0}$), where i=0, 1, ..., M-1, is calculated for each of the M signal levels. The multilevel signal is then interpolated at a phase -UI/R in order to find the corresponding standard deviation $\sigma_{i,-1}$. If $\sigma_{i,-1} < \sigma_{i,0}$, the interpolation continues until obtaining $\sigma_{i,k} < \sigma_{i,k-1}$ and $\sigma_{i,k} < \sigma_{i,k+1}$, where $\sigma_{i,k}$ then represents the minimum or lowest value ($\sigma_{min}$) of the standard deviation ($\sigma$). The subscription k on $\sigma_{i,k}$ is selected for the final interpolation phase of the i-th level and the maximum number of interpolation phases on the left side is given by 0.5*SSR/R. Nevertheless, if the minimum value ($\sigma_{min}$) is not found on the left side, the search is carried out on the reverse side, i.e., on the right side, in order to find the location of the minimum standard deviation value ($\sigma_{min}$). After finding the locations of the minimum $\sigma$ values, the estimated skew values ($p_i$) of each signal level ($L_i$), where i=0, 1, ..., M-1, can be derived by being equal to the time shift ($\Delta$UI) corresponding to the respective minimum $\sigma$ values.

The second method (SEA2), which is similar to an eye symmetrical skew estimation, can provide a better performance than the first method (SEA1) but at a price of higher complexity. In the second method (SEA2), M equidistant signal levels ($L_i$), where i=0, 1, ..., M-1, and M+1 quantizer limits ($Q_i$), where i=0, 1, ..., M, are defined so that the quantizer output is $L_i$ if $Q_i < x \leq Q_{i+1}$, where x is a sample of the interpolated sample at the output of the FFE equalizer, i.e., a sample of the multilevel signal. In addition, 2M equidistant signal levels ($LL_i$), where i=0, 1, ..., 2M-1, and 2M+1 quantizer limits ($QQ_i$), where i=0, 1, ..., 2M, are defined so that the quantizer output is $LL_i$ if $QQ_i < x \leq QQ_{i+1}$. Thus, 2M signal groups can be derived. A skew scanning resolution R (e.g., R=UI/32) and a symmetrical skew scanning range (SSR) (e.g., SSR=UI/2, which means SSR ranging from -UI/4 to UI/4) are also defined. The mean absolute deviation or distance ($m_{i,0}$) from the closest output level $Q_i$, where i=0, 1, ..., 2M-1, is calculated for each of the 2M signal groups. The multilevel signal is then interpolated at a phase -UI/R in order to find the corresponding mean absolute deviation $m_{i,-1}$. If $m_{i,-1} < m_{i,0}$, the interpolation continues until obtaining $m_{i,k} < m_{i,k-1}$ and $m_{i,k} < m_{i,k+1}$, where $m_{i,k}$ then represents the minimum or lowest value ($m_{min}$) of the mean absolute deviation (m). The subscription k on $m_{i,k}$ is selected for the final interpolation phase of the i-th signal group and the maximum number of interpolation phases on the left side is given by 0.5*SSR/R. Nevertheless, if the minimum value ($m_{min}$) is not found on the left side, the search is carried out on the reverse side, i.e., on the right side, in order to find the location of the minimum mean absolute deviation value ($m_{min}$). After finding the locations of the minimum m values, the estimated skew values ($p_i$) of each signal level ($L_i$), where i=0, 1, ..., 2M-1, can be derived by being equal to the time shift ($\Delta$UI) corresponding to the respective minimum m values.

Once the skew values ($p_i$) are estimated, the deskew values ($d_i$) can afterwards be calculated. For that purpose, the present invention suggests a first, second and third deskewing method (DA1-DA3).

In the first deskewing method (denoted DA1), the deskew values ($d_i$) are derived from the skew values ($p_i$) estimated through SEA1 by verifying that $d_i = -p_i$, where i=0, 1, ..., M-1. Each sample of the multilevel signal with M signal levels is then associated with a respective quantization region (or area) amongst the M quantization regions delimited by the M+1 quantizer limits ($Q_i$) and with a respective deskew value derived from the estimated skew values. Afterwards, each sample of the multilevel signal is interpolated through an interpolator using interpolation coefficients derived from the deskew values ($d_i$). For each signal level ($L_i$), a level threshold is found and a decision is made by a decision unit to select the level threshold that minimizes a bit error rate (BER).

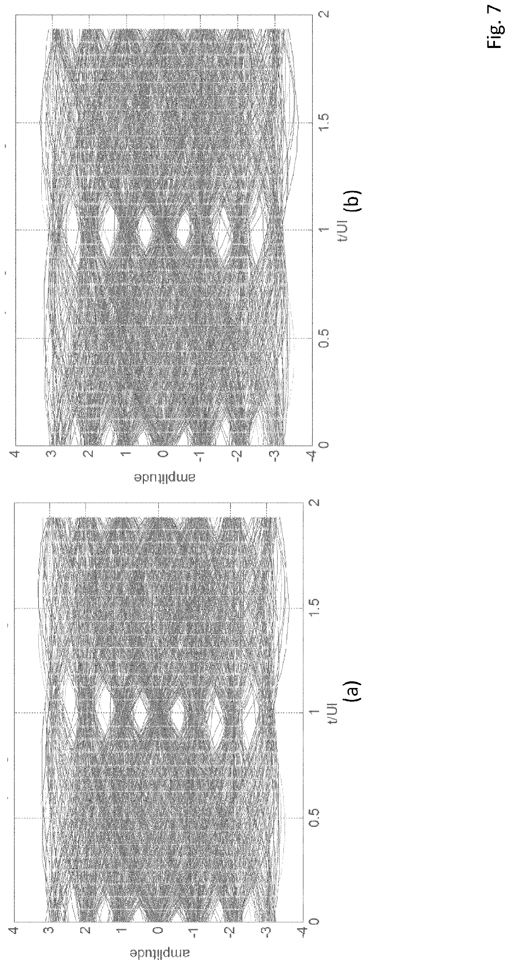

Fig. 7 shows a signal amplitude versus a normalized time (t/UI) depicting (a): an eye diagram of a poly PAM-4 signal before deskewing and (b): an eye diagram of a poly PAM-4 signal after deskewing through DA1, according to an embodiment of the present invention. The poly PAM-4 signal at Pin=-4dBm owns M (i.e., 7) signal levels whose M (i.e., 7) equidistant signal level values $L_i$ (i=0, 1, ..., 6) are: -3, -2, -1, 0, +1, +2, +3; M+1 (i.e., 8) quantizer limits $Q_i$ (i=0, 1, ..., 7) whose values are: $-\infty$, -2.5, -1.5, -0.5, 0.5, 1.5, 2.5, $+\infty$; and M (i.e., 7) deskew values $p_i$ (i=0, 1, ..., 6). By comparing the eye diagrams of Fig. 7(a) and Fig. 7(b), it can be observed that the eyes are more symmetrical around the sampling point 1UI after deskewing than before deskewing.

Although the first deskewing method (DA1) improves the BER performance, better results can be achieved by the second deskewing method (denoted DA2), which is a more sophisticated method using a finer quantization. In DA2, a multilevel signal with M signal levels owns M equidistant signal level values ($L_i$), and 2M quantization regions (or areas) delimited by 2M+1 quantizer limits ($Q_i$) and defined by: $-\infty$, $L_0 + \Delta/4$, $L_0 + 3\Delta/4$, $L_1 + \Delta/4$, $L_1 + 3\Delta/4$, ..., $L_{M-2} + \Delta/4$, $L_{M-2} + 3\Delta/4$, $+\infty$, where $\Delta = L_{i+1} - L_i$. The 2M quantization regions are split into a first group corresponding to an odd numbering of the 2M quantization regions and a second group corresponding to an even numbering of the 2M quantization regions, the numbering being in an ascending order. The deskew values ($d_{0,i}$) are derived, for each first and second group of the 2M quantization regions, from the skew values ($p_i$, $p_{i+1}$) estimated through SEA1 by verifying the following relationship:

$$d_i = a \times p_i + b \times p_{i+1} \text{ with } a \leq 0 \text{ and } b \leq 0 \qquad (1)$$

where a and b are coefficients defined by: a=-1 and b=0 for the first group of 2M quantization regions and a=b=-0.5 for the second group of 2M quantization regions.

In the case of a poly PAM-4 signal having seven signal levels, the seven equidistant signal level values $L_i$ (i=0, 1, ..., 6) can be: -3, -2, -1, 0, +1, +2, +3, while the values of the fourteen quantization regions can be defined by: $-\infty$, -2.75, -2.25, -1.75, -1.25, -0.75, -0.25, 0.25, 0.75, 1.25, 1.75, 2.25, 2.75, $+\infty$, where $\Delta=1$.

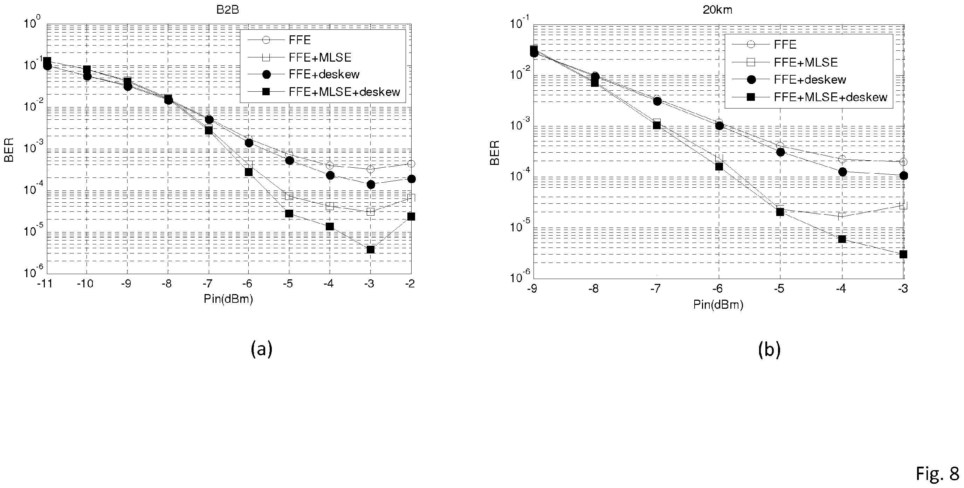

Fig. 8 shows a BER value versus a Pin value before and after deskewing through DA2 in the case of a fiber link having a length equal to (a): 0 km (B2B) and (b): 20 km, according to an embodiment of the present invention. As can be observed, DA2 improves the BER at all Pin values and in particular at lower Pin values.

In the third deskewing method (denoted DA3), which corresponds to a linear deskewing method, the deskew values ($d_{0,i}$) are derived from the skew values ($p_i$) estimated through SEA1 or SEA2 by verifying the following relationships:

$$d_0 = -p_0 \text{ if } x \leq L_0 \qquad (2)$$

$$d_{M-1} = -p_{M-1} \text{ if } x > L_{M-1} \qquad (3)$$

$$d_i = -\left[\frac{(p_{i+1}-p_i)\,(x-L_i)}{\Delta} + p_i\right] \text{ if } x > L_i \text{ and } x \leq L_{i+1} \text{ with } 1 \leq i \leq M-2 \qquad (4)$$

where x is a sample of the interpolated sample at the output of the FFE equalizer, i.e., a sample of the multilevel signal with M signal levels and M equidistant signal level values ($L_i$) and $\Delta = L_{i+1} - L_i$ with i=0, 1, ..., M-1.

In the exemplary case of a poly PAM-4 signal having seven signal levels at FFE output and whose deskew values (di) of its eye diagram are derived from the skew values ($p_i$) estimated through SEA2, the poly PAM-4 signal will own seven equidistant signal level values $L_i$ (defined by $L_i$=-3+i where i=0, 1, ..., 6), fourteen estimated skew values $p_i$ (i=0, 1, ..., 13) for fourteen quantization regions ($A_i$ where i=0, 1, ..., 13) delimited by fifteen quantizer limits $Q_i$ (i=0, 1, ..., 14) such as: $-\infty$, -3, -2.5, -2, -1.5, -1, -0.5, 0, 0.5, 1, 1.5, 2, 2.5, 3, $+\infty$. The estimated fourteen skew values $p_i$ will be then used to calculate the fourteen deskew values $d_i$ according to the following:

$$d = p_0 \text{ if } x \leq A_1 \qquad (5)$$

$$d = p_{13} \text{ if } x > A_{13} \qquad (6)$$

$$d_i = -[(p_{2i+1} - p_{2i})\,(x - L_i) + p_i] \quad \text{if } x > L_i \text{ and } x \leq L_{i+1} \text{ with } i=1, ..., 6 \qquad (7)$$

where x is a sample of the interpolated sample at the output of the FFE equalizer, i.e., a sample of the poly PAM-4 signal.

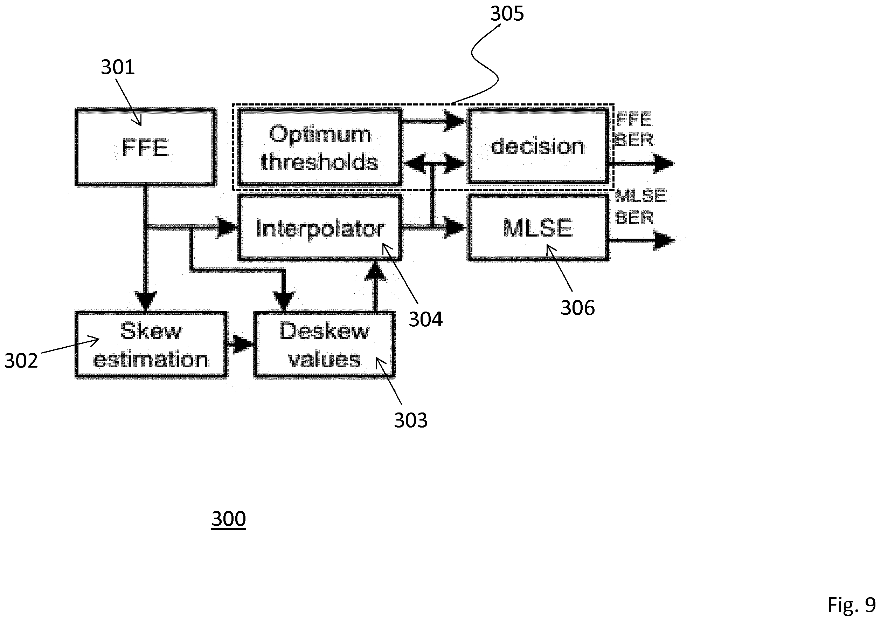

Fig. 9 shows a schematic block diagram of the proposed apparatus 300 for deskewing a multilevel signal according to an embodiment of the present invention.

The skew estimation unit 302 receives samples of a multilevel signal from an FFE equalizer 301 and estimates a standard deviation ($\sigma$) (alternately, a mean absolute deviation (m)) at different sampling phases. Data at different sampling phases are obtained by the interpolation of the FFE samples. The minimum standard deviation ($\sigma_{min}$) (alternately, the minimum mean absolute deviation value ($m_{min}$)) for each signal level of the multilevel signal is found and the time shift ($\Delta$UI) corresponding to this value ($\sigma_{min}$) (alternately, $m_{min}$) is the skew value ($p_i$). The deskew values ($d_i$) for each signal level can then be derived from the estimated skew values ($p_i$) through a deskew values unit 303. These deskew values ($d_i$) are provided to an interpolator 304 that interpolates the multilevel signal using interpolation coefficients derived from the obtained deskew values ($d_i$). In order to minimize a bit error rate (BER), a decision unit 305 determines a level threshold for each signal level and decides about the optimum level threshold that leads to the minimum BER. Still with the aim of minimizing the BER, if a MLSE 306 is provided, then there is no need for finding the optimum level threshold as the MLSE 306 already comprises units dedicated to branch metric calculation (BMC). However, it should

## EP 3 523 918 B1

be noted that a FFE equalizer has usually a better BER performance with than without a MLSE.

In summary, the present invention relates to an apparatus and method for deskewing an eye diagram of a multilevel signal, wherein an eye skew value ($p_i$) of each signal level ($L_i$) of the multilevel signal is first estimated at a respective sampling phase using a variability measurement ($\sigma$, m) and a quantization ($Q_i$) of the respective region associated with each signal level ($L_i$). The estimated eye skew value ($p_i$) of each signal level ($L_i$) equals a time shift ($\Delta UI$) corresponding to the respective lowest value ($\sigma_{min}$, $m_{min}$) of the variability measurement ($\sigma$, m). Then, an eye deskew value ($d_i$) of each quantization region of the multilevel signal is determined at the respective sampling phase based on the estimated eye skew value ($p_i$).

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features, which are already known in the art and may be used instead of or in addition to features already described herein. In particular, the present invention can be applied to any multilevel transmission system. More specifically, the transmission system is not restricted to an optical transmission system. Rather, the present invention can be applied to any wired or wireless coherent or non-coherent transmission system. The transmitter and receiver device of the proposed system can be implemented in discrete hardware or based on software routines for controlling signal processors at the transmission and reception side.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims.

The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. An apparatus for deskewing an eye diagram of a multilevel signal, the apparatus comprising:

   a skew estimator (302) adapted to estimate, at a respective sampling phase, a skew value, $p_i$, of each signal level, $L_i$, of the multilevel signal using a variability measurement, $\sigma$, m, and a quantization, $Q_i$, of the respective region associated with each signal level, $L_i$,; and
   a deskew calculator (303) adapted to determine, at the respective sampling phase, a deskew value, $d_i$, of each quantization region of the multilevel signal based on the estimated skew value, $p_i$, wherein:

   the estimated skew value, $p_i$, of each signal level, $L_i$, equals a time shift, $\Delta UI$, corresponding to the respective lowest value, $\sigma_{min}$, $m_{min}$, of the variability measurement, $\sigma$, m; and,
   wherein the variability measurement is related to a measurement of standard deviation, $\sigma$, or mean absolute deviation, m, for each signal level $L_i$.

2. The apparatus of claim 1, wherein the estimation of the skew value ($p_i$) is performed by using one or two samples per symbol.

3. The apparatus of any one of the preceding claims, wherein the multilevel signal has M levels, M being a natural integer, and is one amongst a N-pulse amplitude modulation, PAM, signal, a bandlimited N-PAM signal, a poly N-PAM signal, a coherent real signal and a coherent complex signal, N being a positive integer that is linked to the M levels by $N \leq M$.

4. The apparatus of any one of the preceding claims, wherein the apparatus comprises:

   an interpolator (304) adapted to interpolate the multilevel signal using interpolation coefficients derived from the determined deskew values, $d_i$; and
   a decision unit (305) adapted to determine a level threshold for each signal level, $L_i$, and decide about the level threshold to be selected so as to minimize a bit error rate, BER.

8

5. A method for deskewing an eye diagram of a multilevel signal, the method comprising:

estimating, at a respective sampling phase, a skew value, $p_i$, of each signal level, $L_i$, of the multilevel signal using a variability measurement, $\sigma$, m, and a quantization, $Q_i$, of the respective region associated with each signal level, $L_i$; and

determining, at the respective sampling phase, a deskew value (di) of each quantization region of the multilevel signal based on the estimated skew value ($p_i$), wherein:

the estimated skew value, $p_i$, of each signal level, $L_i$, equals a time shift, $\Delta UI$, corresponding to the respective lowest value, $\sigma_{min}$, $m_{min}$, of the variability measurement, $\sigma$, m, and,

wherein the variability measurement is related to a measurement of standard deviation, $\sigma$, or mean absolute deviation, m, for each signal level $L_i$.

6. The method of claim 5, wherein the method comprises:

interpolating each sample of the multilevel signal using interpolation coefficients derived from the determined deskew values, $d_i$;

determining a level threshold for each signal level, $L_i$; and

deciding about the level threshold to be selected so as to minimize a bit error rate, BER.

7. The method of claim 5, wherein the step of estimating a skew value, $p_i$, comprises:

defining M equidistant signal levels, $L_i$;

defining M+1 quantizer limits, $Q_i$, so as to have a quantizer output, $x_q$, verifying:

$x_q = L_i$ if $Q_i < x \leq Q_{i+1}$, where x is a sample of the multilevel signal defining a skew scanning resolution, R;

defining a symmetrical skew scanning range, SSR;

calculating a standard deviation, $\sigma_{i,0}$, as the variability measurement for each of the M signal levels, $L_i$; and

interpolating the multilevel signal at a certain phase until the lowest value, $\sigma_{min}$, of the standard deviation, $\sigma$, is found, the estimated skew value, $p_i$, being equal to the time shift, $\Delta UI$, of the lowest value, $\sigma_{min}$.

8. The method of claim 5, wherein the step of estimating a skew value, $p_i$ comprises:

defining M equidistant signal levels, $L_i$;

defining M+1 quantizer limits, $Q_i$, so as to have a quantizer output, $x_q$, verifying:

$x_q = L_i$ if $Q_i < x \leq Q_{i+1}$, where x is a sample of the multilevel signal defining 2M equidistant signal levels, $LL_i$;

defining 2M+1 quantizer limits, $QQ_i$, so as to have a quantizer output, $x_q$, verifying:

$x_q = LL_i$ if $QQ_i < x \leq QQ_{i+1}$, where x is a sample of the multilevel signal defining a skew scanning resolution, R;

defining a symmetrical skew scanning range, SSR;

calculating a mean absolute deviation, $m_{i,0}$, as the variability measurement for each of the 2M signal levels, $LL_i$; and

interpolating the multilevel signal at a certain phase until the lowest value, $m_{min}$, of the mean absolute deviation, m, is found, the estimated skew value, $p_i$, being equal to the time shift, $\Delta UI$, of the lowest value, $m_{min}$.

9. The method of claim 7, wherein the step of determining a deskew value, $d_i$, comprises, DA1:

deriving the deskew value, $d_i$ from the estimated skew values, $p_i$, by verifying that $d_i = -p_i$;

associating each sample of the multilevel signal with a respective quantization region amongst the M quantization regions delimited by the M+1 quantizer limits, $Q_i$, and with a respective deskew value, $d_i$, derived from the estimated skew values, $p_i$; and

applying the steps of claim 7 to each sample of the multilevel signal.

10. The method of claim 7, wherein the step of determining a deskew value, $d_i$, comprises, DA2:

defining M quantizer limits, $Q_i$, in addition to the M+1 quantizer limits, $Q_i$;

splitting the 2M quantization regions delimited by the 2M+1 quantizer limits, $Q_i$, into a first and second group, the first group corresponding to an odd numbering of the 2M quantization regions and the second group corresponding to an even numbering of the 2M quantization regions, the numbering being in an ascending order; and

deriving, for each first and second group of the 2M quantization regions, the respective deskew value, $d_i$, from

the estimated skew values, $p_i$, $p_{i+1}$.

**11.** The method of claim 10, wherein the respective deskew value, $d_i$, is defined by:

$$d_i = a \times p_i + b \times p_{i+1}$$

with $a \leq 0$ and $b \leq 0$ where a and b are coefficients whose value depends on the group amongst the first and second groups of the 2M quantization regions.

**12.** The method of claim 11, wherein a=-1 and b=0 for the first group of 2M quantization regions and a=b=-0.5 for the second group of 2M quantization regions.

**13.** The method of claim 7 or 8, wherein the step of determining a deskew value, di, comprises, DA3:
deriving the deskew value, $d_i$, from the estimated skew values, $p_i$, by verifying the following relationships:

$$d_0 = -p_0 \text{ if } x \leq L_0$$

$$d_{M-1} = -p_{M-1} \text{ if } x > L_{M-1}$$

$$d_i = -[\frac{(p_{i+1} - p_i)(x - L_i)}{\Delta} + p_i] \text{ if } x > L_i \text{ and } x \leq L_{i+1} \text{ with } 1 \leq i \leq M-2$$

where x is a sample of the multilevel signal and $\Delta = L_{i+1} - L_i$ with i=0, 1, ..., M-1.

**14.** A computer program comprising a program code which cause a computer to carry out the method according to any one of claims 5 to 13 when executed by the computer.

**Patentansprüche**

**1.** Vorrichtung zum Entzerren eines Augendiagramms von einem Mehrpegelsignal, wobei die Vorrichtung Folgendes umfasst:

eine Verzerrungsschätzeinrichtung (302), die dafür ausgelegt ist, in einer entsprechenden Probenahmephase durch Verwenden einer Variabilitätsmaßeinheit σ, m und einer Quantisierung $Q_i$ des entsprechenden Bereichs, der jedem Signalpegel $L_i$ zugeordnet ist, einen Verzerrungswert $p_i$ von jedem Signalpegel $L_i$ des Mehrpegelsignals zu schätzen; und
einen Entzerrungsberechner (303), der dafür ausgelegt ist, in der entsprechenden Probenahmephase einen Entzerrungswert $d_i$ von jedem Quantisierungsbereich des Mehrpegelsignals basierend auf dem geschätzten Verzerrungswert $p_i$ zu bestimmen, wobei:

der geschätzte Verzerrungswert $p_i$ von jedem Signalpegel $L_i$ gleich einer Zeitverschiebung ΔUI ist, die mit dem entsprechenden niedrigsten Wert $\sigma_{min}$, $m_{min}$ der Variabilitätsmaßeinheit σ, m korrespondiert; und, wobei die Variabilitätsmaßeinheit für jeden Signalpegel $L_i$ auf eine Messung einer Standardabweichung σ oder einer mittleren absoluten Abweichung m bezogen ist.

**2.** Vorrichtung nach Anspruch 1, wobei die Schätzung des Verzerrungswertes ($p_i$) durch Verwenden von einer oder zwei Proben pro Symbol durchgeführt wird.

**3.** Vorrichtung nach einem der vorhergehenden Ansprüche, wobei das Mehrpegelsignal M Pegel aufweist, wobei M eine natürliche ganze Zahl ist, und das Mehrpegelsignal eines unter Folgendem ist: einem N-Pulsamplitudenmodulationsignal (PAM-Signal), einem bandbegrenzten N-PAM-Signal, einem Poly-N-PAM-Signal, einem kohärenten reellen Signal und einem kohärenten komplexen Signal, wobei N eine positive ganze Zahl ist, die durch N≤M mit den M Pegeln verknüpft ist.

4. Vorrichtung nach einem der vorhergehenden Ansprüche, wobei die Vorrichtung Folgendes umfasst:

einen Interpolator (304), der dafür ausgelegt ist, das Mehrpegelsignal durch Verwenden von Interpolationskoeffizienten zu interpolieren, die von den bestimmten Entzerrungswerten $d_i$ abgeleitet sind; und
eine Entscheidungseinheit (305), die dafür ausgelegt ist, einen Pegelschwellenwert für jeden Signalpegel $L_i$ zu bestimmen und darüber zu entscheiden, dass die Pegelschwellenwerte so ausgewählt werden, dass eine Bitfehlerrate BER minimiert wird.

5. Verfahren zum Entzerren eines Augendiagramms von einem Mehrpegelsignal, wobei das Verfahren Folgendes umfasst:

Schätzen eines Verzerrungswertes $p_i$ von jedem Signalpegel $L_i$ des Mehrpegelsignals in einer entsprechenden Probenahmephase, durch Verwenden einer Variabilitätsmaßeinheit $\sigma$, m und einer Quantisierung $Q_i$ des entsprechenden Bereichs, der jedem Signalpegel $L_i$ zugeordnet ist, und
Bestimmen eines Entzerrungswertes ($d_i$) von jedem Quantisierungsbereich des Mehrpegelsignals in der entsprechenden Probenahmephase, basierend auf dem geschätzten Verzerrungswert ($p_i$), wobei:

der geschätzte Verzerrungswert $p_i$ von jedem Signalpegel $L_i$ gleich einer Zeitverschiebung $\Delta UI$ ist, die mit dem entsprechenden niedrigsten Wert $\sigma_{min}$, $m_{min}$ der Variabilitätsmaßeinheit $\sigma$, m korrespondiert, und
wobei die Variabilitätsmaßeinheit auf eine Messung einer Standardabweichung $\sigma$ oder einer mittleren absoluten Abweichung m für jeden Signalpegel $L_i$ bezogen ist.

6. Verfahren nach Anspruch 5, wobei das Verfahren Folgendes umfasst:

Interpolieren jeder Probe des Mehrpegelsignals durch Verwenden von Interpolationskoeffizienten, die von den bestimmten Entzerrungswerten $d_i$ abgeleitet sind;
Bestimmen eines Pegelschwellenwertes für jeden Signalpegel $L_i$; und
Entscheiden darüber, dass der Pegelschwellenwert so ausgewählt ist, dass eine Bitfehlerrate BER minimiert wird.

7. Verfahren nach Anspruch 5, wobei der Schritt des Schätzens eines Verzerrungswertes $p_i$ Folgendes umfasst:

Definieren von M äquidistanten Signalpegeln $L_i$;
Definieren von M+1 Quantisierungsgrenzwerten $Q_i$, sodass sie einen Funktionswert $x_q$ der Quantisierung ergeben, der verifiziert, dass:

$x_q=L_i$ wenn $Q_i<x\leq Q_{i+1}$, wobei x eine Probe des Mehrpegelsignals ist; Definieren einer Verzerrungsabtastauflösung R;
Definieren eines symmetrischen Verzerrungsabtastbereichs SSR;
Berechnen einer Standardabweichung $\sigma_{i,0}$ als die Variabilitätsmaßeinheit für jeden der M Signalpegel $L_i$; und
Interpolieren des Mehrpegelsignals in einer bestimmten Phase, bis der niedrigste Wert $\sigma_{min}$ der Standardabweichung $\sigma$ gefunden ist, wobei der geschätzte Verzerrungswert $p_i$ gleich der Zeitverschiebung $\Delta UI$ des niedrigsten Wertes $\sigma_{min}$ ist.

8. Verfahren nach Anspruch 5, wobei der Schritt des Schätzens eines Verzerrungswertes $p_i$ Folgendes umfasst:

Definieren von M äquidistanter Signalpegel $L_i$;
Definieren von M+1 Quantisierungsgrenzwerten $Q_i$, sodass sie einen Funktionswert $x_q$ der Quantisierung ergeben, der verifiziert, dass:

$x_q=L_i$ wenn $Q_i<x\leq Q_{i+1}$, wobei x eine Probe des Mehrpegelsignals ist; Definieren von 2M äquidistanten Signalpegeln $LL_i$;
Definieren von 2M+1 Quantisierungsgrenzwerten $QQ_i$, sodass sie einen Funktionswert $x_q$ der Quantisierung ergeben, der verifiziert, dass:

$x_q=LL_i$ wenn $QQ_i<x\leq QQ_{i+1}$, wobei x eine Probe des Mehrpegelsignals ist Definieren einer Verzerrungsabtastauflösung R;
Definieren eines symmetrischen Verzerrungsabtastbereichs SSR;

Berechnen einer mittleren absoluten Abweichung $m_{i,0}$ als der Variabilitätsmaßeinheit für jede der 2M Signalpegel $LL_i$; und

Interpolieren des Mehrpegelsignals in einer bestimmten Phase, bis der niedrigste Wert $m_{min}$ der mittleren absoluten Abweichung m gefunden ist, wobei der geschätzte Verzerrungswert $p_i$ gleich der Zeitverschiebung $\Delta UI$ des niedrigsten Wertes $m_{min}$ ist.

9. Verfahren nach Anspruch 7, wobei der Schritt des Bestimmens eines Entzerrungswertes $d_i$ Folgendes umfasst, DA1:

Ableiten eines Entzerrungswertes $d_i$ von den geschätzten Verzerrungswerten $p_i$ durch Verifizieren, dass $d_i=-p_i$;
Zuordnen einer jeden Probe des Mehrpegelsignals zu einem entsprechenden Quantisierungsbereich unter den M Quantisierungsbereichen, die durch die M+1 Quantisierungsgrenzwerte $Q_i$ eingegrenzt sind, und zu einem entsprechenden Entzerrungswert $d_i$, der von den geschätzten Verzerrungswerten $p_i$ abgeleitet ist; und
Anwenden der Schritte nach Anspruch 7 bei jeder Probe des Mehrpegelsignals.

10. Verfahren nach Anspruch 7, wobei der Schritt des Bestimmens eines Entzerrungswertes $d_i$ Folgendes umfasst, DA2:

Definieren von M Quantisierungsgrenzwerten $Q_i$, zusätzlich zu den M+1 Quantisierungsgrenzwerten $Q_i$;
Aufteilen der 2M Quantisierungsbereiche, die durch die 2M+1 Quantisierungsgrenzwerte $Q_i$ eingegrenzt sind, in eine erste und eine zweite Gruppe, wobei die erste Gruppe mit einer ungeradzahligen Nummerierung der 2M Quantisierungsbereiche korrespondiert und die zweite Gruppe mit einer geradzahligen Nummerierung der 2M Quantisierungsbereiche korrespondiert, wobei die Nummerierung in aufsteigender Reihenfolge verläuft; und
Ableiten des entsprechenden Entzerrungswertes $d_i$ von den geschätzten Verzerrungswerten $p_i$, $p_{i+1}$ für jede der ersten und der zweiten Gruppe der 2M Quantisierungsbereiche.

11. Verfahren nach Anspruch 10, wobei der entsprechende Entzerrungswert $d_i$ definiert ist durch:

$$d_i = a \times p_i + b \times p_{i+1} \; \text{mit} \; a \le 0 \; \text{und} \; b \le 0$$

wobei a und b Koeffizienten sind, deren Wert abhängig ist von der Gruppe unter der ersten und der zweiten Gruppe der 2M Quantisierungsbereiche.

12. Verfahren nach Anspruch 11, wobei $a = -1$ und $b = 0$ für die erste Gruppe der 2M Quantisierungsgruppen gilt, und $a = b = -0,5$ für die zweite Gruppe der 2M Quantisierungsgruppen gilt.

13. Verfahren nach Anspruch 7 oder 8, wobei der Schritt des Bestimmens eines Entzerrungswertes $d_i$ Folgendes umfasst:
DA3:
Ableiten eines Entzerrungswertes $d_i$ von den geschätzten Verzerrungswerten $p_i$ durch Verifizieren der folgenden Beziehungen:

$$d_0 = -p_0 \; \text{wenn} \; x \le L_0$$

$$d_{M-1} = -p_{M-1} \; \text{wenn} \; x > L_{M-1}$$

$$d_1 = -[\frac{(p_{i+1}-p_i)(x-L_i)}{\Delta} + p_i] \; \text{wenn} \; x > L_i \; \text{und} \; x \le L_{i+1} \; \text{mit} \; 1 \le i \le M-2$$

wobei x eine Probe des Mehrpegelsignals ist und $\Delta = L_{i+1} - L_i$ mit $i = 0; 1; ...; M - 1$.

14. Computerprogramm, das einen Programmcode umfasst, der dazu führt, dass ein Computer ein Verfahren nach einem der Ansprüche 5 bis 13 ausführt, wenn es von dem Computer durchgeführt wird.

**Revendications**

1. Appareil de réalignement d'un diagramme en œil d'un signal multi-niveau, l'appareil comprenant :

   un estimateur d'alignement (302) adapté pour estimer, à une phase d'échantillonnage respective, une valeur d'alignement, $p_i$, de chaque niveau de signal, $L_i$, du signal multi-niveau en utilisant une mesure de variabilité, $\sigma$, m, et une quantification, $Q_i$, de la région respective associée à chaque niveau de signal, $L_i$ ; et
   un calculateur de réalignement (303) adapté pour déterminer, à la phase d'échantillonnage respective, une valeur de réalignement, $d_i$, de chaque région de quantification du signal multi-niveau d'après la valeur d'alignement estimée, $p_i$, dans lequel :

   la valeur d'alignement estimée, $p_i$, de chaque niveau de signal, $L_i$, est égale à un décalage temporel, $\Delta UI$, correspondant à la plus faible valeur respective, $\sigma_{min}$, $m_{min}$, de la mesure de variabilité, $\sigma$, m ; et,
   dans lequel la mesure de variabilité est relative à une mesure d'écart-type, $\sigma$, ou d'écart moyen absolu, m, pour chaque niveau de signal, $L_i$.

2. Appareil selon la revendication 1, dans lequel l'estimation de la valeur d'alignement ($p_i$) est réalisée en utilisant un ou deux échantillons par symbole.

3. Appareil selon l'une quelconque des revendications précédentes, dans lequel le signal multi-niveau a M niveaux, M étant un entier naturel, et est un parmi un signal de modulation d'amplitude à N impulsions, PAM, un signal N-PAM limité en bande, un signal poly N-PAM, un signal réel cohérent et un signal complexe cohérent, N étant un entier positif qui est lié aux M niveaux par $N \leq M$.

4. Appareil selon l'une quelconque des revendications précédentes, dans lequel l'appareil comprend :

   un interpolateur (304) adapté pour interpoler le signal multi-niveau en utilisant des coefficients d'interpolation dérivés des valeurs de réalignement déterminées, $d_i$ ; et
   une unité de décision (305) adaptée pour déterminer un seuil de niveau pour chaque niveau de signal, $L_i$, et décider du seuil de niveau à sélectionner de façon à minimiser un taux d'erreur sur les bits, BER.

5. Procédé de réalignement d'un diagramme en œil d'un signal multi-niveau, le procédé comprenant :

   l'estimation, à une phase d'échantillonnage respective, d'une valeur d'alignement, $p_i$, de chaque niveau de signal, $L_i$, du signal multi-niveau en utilisant une mesure de variabilité, $\sigma$, m, et une quantification, $Q_i$, de la région respective associée à chaque niveau de signal, $L_i$ ; et
   la détermination, à la phase d'échantillonnage respective, d'une valeur de réalignement ($d_i$) de chaque région de quantification du signal multi-niveau d'après la valeur d'alignement estimée ($p_i$), dans lequel :

   la valeur d'alignement estimée, $p_i$, de chaque niveau de signal, $L_i$, est égale à un décalage temporel, $\Delta UI$, correspondant à la plus faible valeur respective, $\sigma_{min}$, $m_{min}$, de la mesure de variabilité, $\sigma$, m, et,
   dans lequel la mesure de variabilité est relative à une mesure d'écart-type, $\sigma$, ou d'écart moyen absolu, m, pour chaque niveau de signal, $L_i$.

6. Procédé selon la revendication 5, dans lequel le procédé comprend :

   l'interpolation de chaque échantillon du signal multi-niveau en utilisant des coefficients d'interpolation dérivés des valeurs de réalignement déterminées, $d_i$ ;
   la détermination d'un seuil de niveau pour chaque niveau de signal, $L_i$ ; et
   la décision du seuil de niveau à sélectionner de façon à minimiser un taux d'erreur sur les bits, BER.

7. Procédé selon la revendication 5, dans lequel l'étape d'estimation d'une valeur d'alignement, $p_i$, comprend :

   la définition de M niveaux de signal équidistants, $L_i$ ;
   la définition de M + 1 limites de quantificateur, $Q_i$, de façon à avoir une sortie de quantificateur, $x_q$, vérifiant :

   $x_q = L_i$ si $Q_i < x \leq Q_{i+1}$, où x est un échantillon du signal multi-niveau la définition d'une résolution de balayage d'alignement, R ;

la définition d'une plage de balayage d'alignement symétrique, SSR ;
le calcul d'un écart-type, $\sigma_{i,0}$, comme la mesure de variabilité pour chacun des M niveaux de signal, $L_i$ ; et
l'interpolation du signal multi-niveau à une certaine phase jusqu'à ce que la plus faible valeur, $\sigma_{min}$, de l'écart-type, $\sigma$, soit trouvée, la valeur d'alignement estimée, $p_i$, étant égale au décalage temporel, $\Delta UI$, de la plus faible valeur, $\sigma_{min}$.

**8.** Procédé selon la revendication 5, dans lequel l'étape d'estimation d'une valeur d'alignement, $p_i$, comprend :

la définition de M niveaux de signal équidistants, $L_i$ ;
la définition de M + 1 limites de quantificateur, $Q_i$, de façon à avoir une sortie de quantificateur, $x_q$, vérifiant :
$x_q = L_i$ si $Q_i < x \leq Q_{i+1}$, où x est un échantillon du signal multi-niveau la définition de 2M niveaux de signal équidistants, $LL_i$ ; la définition de 2M + 1 limites de quantificateur, $QQ_i$, de façon à avoir une sortie de quantificateur, $x_q$, vérifiant :

$x_q = LL_i$ si $QQ_i < x \leq QQ_{i+1}$, où x est un échantillon du signal multi-niveau la définition d'une résolution de balayage d'alignement, R ;
la définition d'une plage de balayage d'alignement symétrique, SSR ;
le calcul d'un écart moyen absolu, $m_{i,0}$, comme la mesure de variabilité pour chacun des 2M niveaux de signal, $LL_i$ ; et
l'interpolation du signal multi-niveau à une certaine phase jusqu'à ce que la plus faible valeur, $m_{min}$, de l'écart moyen absolu, m, soit trouvée, la valeur d'alignement estimée, $p_i$, étant égale au décalage temporel, $\Delta UI$, de la plus faible valeur, $m_{min}$.

**9.** Procédé selon la revendication 7, dans lequel l'étape de détermination d'une valeur de réalignement, $d_i$, comprend, DA1 :

la dérivation de la valeur de réalignement, $d_i$, à partir des valeurs d'alignement estimées, $p_i$, en vérifiant que $d_i = -p_i$ ;
l'association de chaque échantillon du signal multi-niveau à une région de quantification respective parmi les M régions de quantification délimitées par les M + 1 limites de quantificateur, $Q_i$, et à une valeur de réalignement respective, $d_i$, dérivée des valeurs d'alignement estimées, $p_i$ ; et
l'application des étapes de la revendication 7 à chaque échantillon du signal multi-niveau.

**10.** Procédé selon la revendication 7, dans lequel l'étape de détermination d'une valeur de réalignement, $d_i$, comprend, DA2 :

la définition de M limites de quantificateur, $Q_i$, en plus des M + 1 limites de quantificateur, $Q_i$ ;
la scission des 2M régions de quantification délimitées par les 2M + 1 limites de quantificateur, $Q_i$, en un premier et un second groupe, le premier groupe correspondant à une numérotation impaire des 2M régions de quantification et le second groupe correspondant à une numérotation paire des 2M régions de quantification, la numérotation se faisant par ordre ascendant ; et
la dérivation, pour chaque premier et second groupe des 2M régions de quantification, de la valeur de réalignement respective, $d_i$, à partir des valeurs d'alignement estimées, $p_i$, $p_{i+1}$.

**11.** Procédé selon la revendication 10, dans lequel la valeur de réalignement respective, $d_i$, est définie par :

$$d_i = a \times p_i + b \times p_{i+1}$$

avec $a \leq 0$ et $b \leq 0$ où a et b sont des coefficients dont la valeur dépend du groupe parmi les premier et second groupes des 2M régions de quantification.

**12.** Procédé selon la revendication 11, dans lequel a = -1 et b = 0 pour le premier groupe des 2M régions de quantification et a = b = -0,5 pour le second groupe des 2M régions de quantification.

**13.** Procédé selon la revendication 7 ou 8, dans lequel l'étape de détermination d'une valeur de réalignement, $d_i$, comprend, DA3 :
la dérivation de la valeur de réalignement, $d_i$, à partir des valeurs d'alignement estimées, $p_i$, en vérifiant les relations suivantes :

$$d_0 = -p_0 \ \text{si} \ x \leq L_0$$

$$d_{M-1} = -p_{M-1} \ \text{si} \ x > L_{M-1}$$

$$d_i = -\left[\frac{(p_{i+1}-p_i)(x-L_i)}{\Delta} + p_i\right] \ \text{si} \ x > L_i \ \text{et} \ x \leq L_{i+1}$$

avec $1 \leq i \leq M-2$ où x est un échantillon du signal multi-niveau et $\Delta = L_{i+1} - L_i$ avec i = 0, 1, ..., M-1.

**14.** Programme d'ordinateur comprenant un code de programme qui amène un ordinateur à réaliser le procédé selon l'une quelconque des revendications 5 à 13, lorsqu'il est exécuté par l'ordinateur.

Tx PAM-n → FEC → EQ + DAC → MD → MOD (LO →) → MMF/SMF 850/1298/1550nm → PD → AGC → ADC → FFE/DFE/NLE → MLSE → FEC → Rx PAM-n

TR

Fig. 1

100

a)

b)

EP 3 523 918 B1

Fig. 2

Fig. 3

Fig. 4

eye diagramEye after FFE filter

Averaged eye diagram

(a)

(b)

Fig. 5

Fig. 6

(a)

(b)

Fig. 7

EP 3 523 918 B1

(a)

(b)

Fig. 8

EP 3 523 918 B1

Fig. 9

300

EP 3 523 918 B1

**EP 3 523 918 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015071653 A